# EUROPEAN PATENT SPECIFICATION

(11) **EP 3 913 257 B1**
(45) Date of publication and mention of the grant of the patent: **22.02.2023**
(21) Application number: 21174470.1
(22) Date of filing: 18.05.2021
(51) Int. Cl.: F16H 47/04, F16H 61/4192, F16H 61/431

(54) **SYSTEM AND METHOD FOR MONITORING THE WEAR STATE OF A HYDROSTATIC TRANSMISSION**
SYSTEM UND VERFAHREN ZUR ÜBERWACHUNG DES VERSCHLEISSZUSTANDS EINES HYDROSTATISCHEN GETRIEBES
SYSTÈME ET PROCÉDÉ DE SURVEILLANCE DE L'ÉTAT D'USURE D'UNE TRANSMISSION HYDROSTATIQUE

(30) Priority: 19.05.2020 IT 202000011602
(43) Date of publication of application: 24.11.2021
(73) Proprietor: CNH Industrial Italia S.p.A., 10135 Torino (IT)
(72) Inventor: MELEGARI, Mario, 41126 Modena (IT); MORANDI, Gabriele, 41125 Modena (IT); SUFFRITTI, Alberto, 41125 Modena (IT); ZANASI, Nicholas, 41013 Modena (IT); AQUILANI, Valerio, 41121 Modena (IT)
(74) Representative: CNH Industrial IP Department

(56) References cited:
- WO-A1-2013/072314
- DE-T5-112017 001 159
- US-A1- 2017 314 673
- US-B2- 7 806 796

## Description

### Field of the invention

The present invention relates to the field of hydrostatic transmissions and in particular to a state of wear of a relative control valve of the displacement of the variable displacement pump defining the hydrostatic transmission.

### State of the art

Hydrostatic transmissions are known. These are mainly used in the field of agricultural and work machines as shown in WO2013/072314A1.

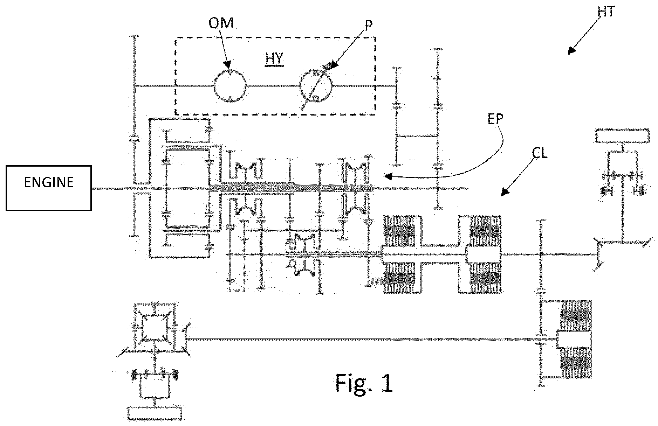

Figure 1 shows an example of a HY hydrostat.

The hydrostat generally includes a variable displacement P pump that powers an OM hydraulic motor, generally with fixed geometry. Therefore, a hydrostatic transmission comprises at least one pump-motor assembly.

This group can be combined with further transmission components, including an epicyclic gearbox EP, which, as known, comprises three doors.

With reference to figure 1, a first (solar) door is directly connected to a prime mover, for example an internal combustion engine. The prime mover also rotates the variable geometry pump. A second door of the planetary gear (ring) is operationally connected to the output of the hydraulic motor of the hydrostatic transmission.

The third door (carrier) of the planetary gear is connected to the vehicle wheels by means of a clutch equipped with a relative synchronizer.

In figure 1, the scheme is further complicated by the fact that the planetary gear is double: there is a double satellite holder (carrier), operatively coupled with a second solar. Therefore, the vehicular wheels can be associated with the third door (carrier) or with the second solar door of a double epicyclic gearing.

In any case, the specific details of the transmission are not relevant.

When the vehicle is in park (Park) the clutch is open and the hydraulic motor is stopped, since the variable displacement pump is arranged to pump zero flow of hydraulic fluid. In fact, when the pump plate is perpendicular to the shaft, the pump does not pump hydraulic fluid, although being driven in rotation by the prime mover, and therefore the hydrostatic ratio is zero (ZERO RATIO) therefore the wheel drive has the first door driven by the engine first and second doors firm. The third door rotates due to the prime mover only, but since the clutch is open, no torque is transmitted to the wheels. Under ZERO RATIO conditions, it is conventionally assumed that the plate controlling the pump is in position "0". Conversely, the pump can drive the hydraulic motor forward up to the maximum limit of +1 and backward up to the maximum limit of -1.

When the plate assumes a predetermined HSTO position, the hydraulic motor turns (contrary to the prime mover) so that the third door is still, so that the clutch can be closed, at least after a transient. In these conditions the vehicle has the hydrostatic system with hydrostatic ratio HSTO (POWER ZERO RATIO), but it is stationary (Standstill DRIVE) as the third door is stationary although the first door and the second door are operated in rotation, therefore it can be defined as "dynamic stop" because the vehicle is stationary and the transmission is moving. By analogy with vehicles equipped with a discrete gearbox, the dynamic standstill condition corresponds to the geared gear condition.

Therefore, the HSTO ratio is a speed ratio between the input and the output of the hydrostat, such that the third output of the epicyclical is stationary.

Since the hydrostat input is proportional to the rotation speed of the prime mover shaft, then the ratio between the rotation speed of the prime mover shaft and the rotation speed of the hydraulic pump of the hydrostat.

When the valve that controls the pump displacement starts to deteriorate, the transmission behaviour becomes unpredictable, with the vehicle bouncing for an imperfect coordination between hydrostatic transmission and clutch.

For the purposes of this description, the "deterioration" of the valve includes the consumption of the valve itself and/or its clogging due to the contamination of the hydraulic oil. This problem is especially felt during gear changes.

Some hydrostatic transmissions also implement two control valves, but the problem does not change.

Since the cost of the replacement is particularly expensive, it is necessary to have valid tools for diagnosing the operating conditions of the valve in order to avoid replacing it too early in relation to the aforementioned conditions.

If not specifically excluded in the detailed description that follows, what is described in this chapter is to be considered as an integral part of the detailed description.

### Summary of the invention

The object of the present invention is to present a method for monitoring a state of wear of a hydrostatic transmission of a vehicle transmission as in claim 1.

The basic idea of the present invention is to monitor the changes in the switching dynamics of the pump displacement control valve when it passes from the parking condition (ZERO RATIO) to the vehicle in dynamic standstill, i.e. with hydrostatic ratio HSTO (POWR ZERO RATIO) and/or vice versa. Generally, during such commutations the transmission clutch is open.

For the purposes of this description, the terms switching and transition referring to the hydrostat valve are equivalent. When the valve is deteriorated, if the control system that feeds the valve does not include an integrator, then the times to go from ZERO RATIO to HSTO are longer. Vice versa, when the control includes a PI (proportional-integral) and/or a feedback control, then the controller varies the valve supply current so as to recover an initial valve switching slowness, causing a sudden and premature achievement of the HSTO relationship with an undershoot.

For the purposes of these purposes, it is equivalent to monitor the progress of the hydrostatic ratio or the speed of the hydraulic motor or the flow rate of pumped oil, since these are interrelated quantities, each useful for characterizing the dynamic behaviour of the valve connected to the hydrostat. This is because the controller has an increasingly faster valve dynamics.

It is worth highlighting that generally, but not necessarily, hydrostatic transmissions are equipped with a high-level controller that controls acceleration, gear change, etc. performance. Since the controller monitors the dynamic conditions of the output shaft of the transmission, the controller increases the driving current of the valve causing an under-damped behaviour of the hydrostat with triggering oscillations of the hydrostatic ratio around the HSTO value. Conversely, if the control is in an open circuit, all the slowness of the deteriorated valve is found in the slowness of reaching the hydrostatic ratio and the risk that the clutch cannot be closed on the transmission, or the vehicle can be kept in a dynamic standstill .

In other words, the dynamics of switching from ZERO RATIO to HSTO, and vice versa, varies both in the times of achievement of HSTO and in the modes.

In particular, the state of wear of the valve can be determined in many ways .

Some examples are based on the dynamic analysis of the system:
- from the time of achievement of HSTO with respect to a statistical average value measured on a sample of new transmissions;
- By the extent of the undershoot of the hydrostatic ratio, detected by identifying the absolute minimum;
- By the extent of the undershoot of the hydrostatic ratio, detected by calculating the integral defined by the hydrostatic ratio curve;
- by analysing the flow of the pilot current of the valve, which is characterized by a particularly pronounced undershoot in transient and by a significant divergence in posttransient, therefore it is possible to monitor the undershoot and/or the divergence value.

Preferably, this analysis is performed in a predetermined range of temperatures of the hydraulic oil of the transmission, in order to have homogeneous comparisons between the characteristic parameters of the system in ideal conditions when new, and the system in operating conditions. Preferably, this temperature range is between 50 and 70 ° C. The present invention also relates to a valve control method which controls the hydrostatic ratio of the hydrostat. According to the present invention, a so-called "dither" is applied to the control signal of the valve, that is to say a disturbing signal of a moderate amplitude such as to keep the valve constantly active around a preordained working point.

According to a preferred variant of the present invention, when the monitoring method object of the present invention detects that the valve has deteriorated, the characteristic parameters of the disturbing signal are expected to vary. More specifically, at least two different disturbing signals are expected to be applied. When with a disturbance signal it appears that the valve has deteriorated, then the vehicle user is informed of an imminent need to replace the valve and preferably the parameters of the disturbance signal are changed.

Furthermore, when, while monitoring, it is experienced that the valve has deteriorated with both a first and a second different signal of disturbance, then, the user of the vehicle is informed that an immediate replacement of the valve is required and it can further proceed with the activation of safety procedures, for example by keeping the hydrostat in ZERO RATIO and the vehicle in Park.

Clearly, before signalling an imminent need to replace the valve or before starting the aforementioned safety procedures, the monitoring procedures are carried out a predetermined number of times, and only when the results are stable it is possible to proceed in the aforementioned actions. Indeed, it can happen that the pollutants contained in the hydraulic oil can temporary lead to detect a valve malfunction that ends after a while.

The dependent claims describe preferred embodiments of the invention as in the appended claims, forming an integral part of this description.

### Brief description of the figures

Further objects and advantages of the present invention will become clear from the detailed description that follows of an example of embodiment of the same (and of its variants) and from the attached drawings given purely for explanatory and non-limiting purposes, in which:
Figure 1 shows an example of a hydrostatic transmission comprising a hydrostat and a clutch, for transferring the rotation motion from a prime mover to at least one vehicular wheel;
Figure 2 shows a comparison of the trends in the hydrostatic ratio, that is to say the ratio of the rotation speed between the hydraulic motor and the relative pump, between a new hydrostat and the more and more deteriorated hydrostats;
in figure 3, based on the same trends as in figure 1, it shows a different way of identifying the deterioration of the hydrostat;
Figure 4 shows a comparison between the driving currents of a new hydrostat and a deteriorated hydrostat,

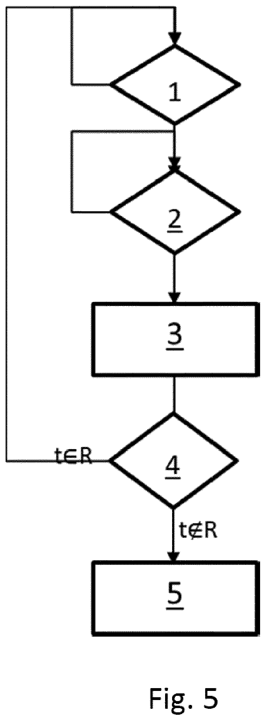

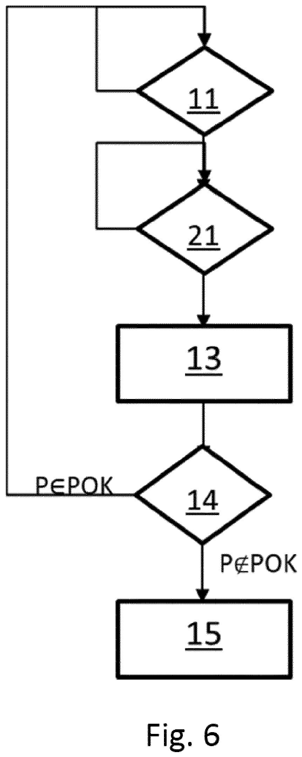

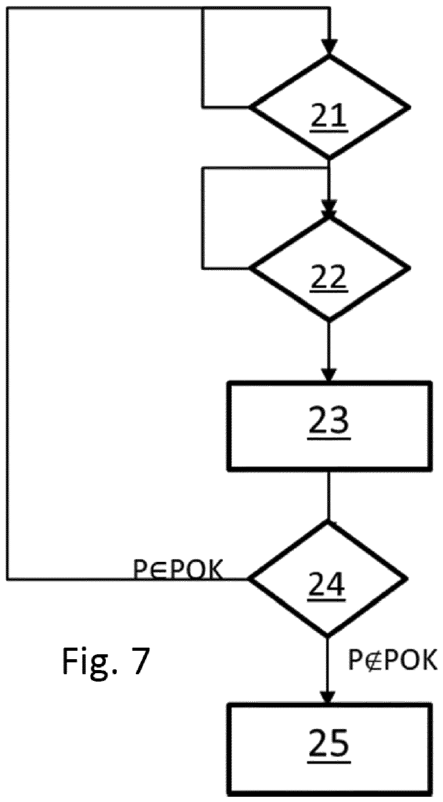

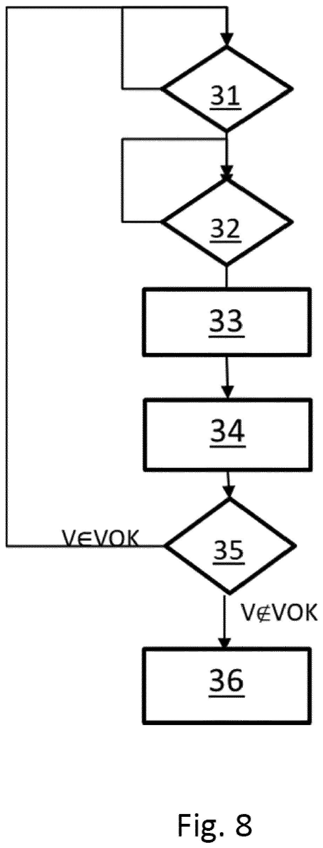

Figures 5 - 8 show flow diagrams of examples of monitoring a parameter of the dynamics of the hydrostat control valve;
Figure 9 shows an example of a control flow diagram of the valve based on the monitoring object of the present invention,

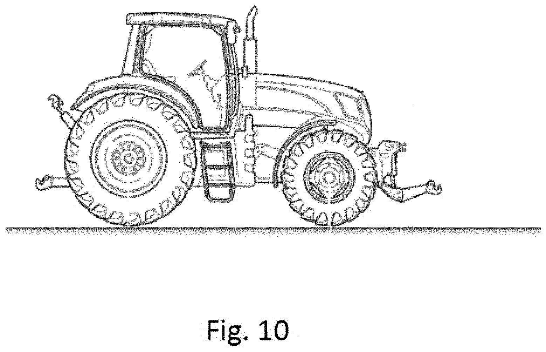

Figure 10 shows an agricultural or work vehicle equipped with a hydraulic transmission equipped with the monitoring and/or control system object of the present invention.

The same numbers and the same reference letters in the figures identify the same elements or components or functions.

In the context of this description, the term "second" component does not imply the presence of a "first" component. These terms are in fact used as labels to improve clarity and are not intended to be limited.

The elements and characteristics illustrated in the various preferred embodiments, including the drawings, can be combined with each other without however departing from the scope of the present invention as in the appended claims.

### Detailed description of exemplary embodiments

The operating condition of the hydrostat is generally indicated in relation to the operating position of the hydraulic pump plate.

The plate, conventionally, can assume positions such as to confer a hydrostatic ratio between -1 and +1 as well as a condition of storage or ZERO RATIO in which the pump does not pump oil to the hydrostatic motor.

There is a condition between -1 and +1 in which the aforementioned hydrostatic ratio HSTO is defined, in which the hydrostatic motor is active in rotation so that the third door of the planetary gear is stationary (POWER ZERO RATIO), so that the vehicle it is dynamic standstill (Standstill DRIVE) although both the prime mover and the hydrostatic engine are active in rotation, compensating each other due to the presence of the planetary gear.

Only for greater clarity of the present description is it assumed that HSTO is reached with the condition of the hydrostatic ratio equal to -1. It must be clear that the HSTO ratio, corresponding to a stationary vehicle, can be reached, in other configurations, with a different hydrostatic ratio, for example at -0.8, etc.

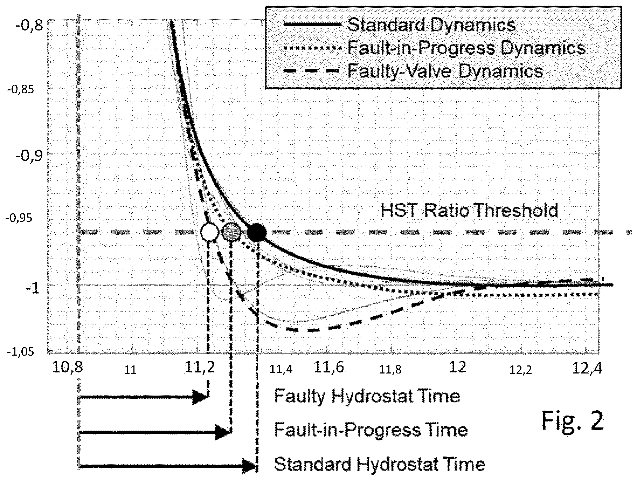

What matters, according to the present invention is the response of the valve to a step changeover as shown in figure 2.

Figure 2 shows the variation of the hydrostatic ratio over time, and in particular the rapid achievement of the position -1 of the pump plate during the transition from the
a) parking condition (PARK), wherein a clutch disposed on the transmission disconnects the wheels and in which the parking brake is activated,
b) when the clutch is closed and the parking brake is released and the vehicle is stationary dynamic (Standstill DRIVE). This switching is performed approximately at 10.8 seconds. The initial phases of the curves are not visible as the graph in figure 2 represents a zoom centered on the predefined threshold HST Ratio Threshold.

In the continuation of the present description, only the transition from condition a) to condition b) is considered, but it must be considered that the reverse transition from b) to a) is identically significant for the purposes of the present invention.

A first trend is shown, indicated with "Standard Dynamics" and a continuous line, it represents the dynamics of a new valve. The second trend indicated with "Fault-in-Progress Dynamics" and dotted line, represents a first divergence that occurs when the valve starts to deteriorate. In this case, it is noted that the dynamic is substantially faster with a curve that tends asymptotically and without oscillations to the value -1.

Both the first and the second pattern are typical of a trend of the first order.

The third trend, indicated with the "Faulty-Valve Dynamics" label and dotted line is a typical second-order trend according to which there is an oscillation around the -1 value and an under-elongation that negatively exceeds the value -1. It is therefore noted that the time to reach any threshold HST Ratio Threshold close to the value -1, is reduced as the valve deteriorates.

This is largely attributable to the controller of the transmission, which in the early phases of the drive detects a slow dynamics of the valve and reacts proportionally increasing the drive current of the valve itself. This means that the same valve, subjected to high intensity of the pilot signals, recovers the delay by reaching the threshold HST Ratio Threshold before a new valve, i.e. before that in the standard operating conditions.

As the valve conditions worsen, the oscillations around the - 1 value become more rapid, causing an intolerable instability of the hydrostatic transmission.

Analysing the graph of figure 1, it is understood that to determine the conditions of the valve it is sufficient to analyse the deviation, with respect to a nominal value, of any parameter of a trend representative of the dynamics of the same valve.

For example, according to a first variant of the invention, the rapidity with which the curve trend, representative of the valve dynamics, reaches the HST Ratio Threshold value, which for example is -0.96, is analysed.

According to a second preferred variant of the invention, the undershoot of the same trend is analysed. In this case, the HST Ratio Threshold is set exactly to -1 to evaluate the under-elongation with respect to this value.

With reference to figure 2, for example, the extent of the undershoot is estimated, calculating the integral of the representative curve of the hydrostatic ratio below the HST Ratio Threshold, which is preferably set to the value -1 corresponding to HSTO.

Obviously, by changing the HST Ratio Threshold the concept does not change.

The same considerations can be made by analysing the intensity of the valve piloting signals, since, in order to recover a valve switching delay, the controller must proportionally increase the variation in the intensity of the electrical signal driving the same valve.

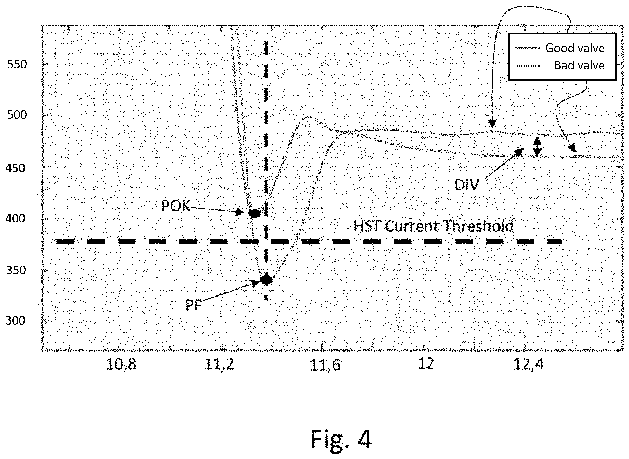

Figure 4 shows a comparison between a pilot signal of a new valve indicated with "Good valve" and a deteriorated valve "Bad valve".

Note that the negative POK peak of the control signal relating to the valve in good condition is less evident than the corresponding PF peak of the deteriorated valve.

Since the switching involves a variation of the driving from a greater intensity of the signal current to a lower intensity, it results that the peak of current PF is lower than POK. Thus, analysing on a statistical basis the value of the minimum current to be supplied to the valve to keep it in stable conditions in POWR ZERO RATIO and detecting that the necessary current is reduced below a predetermined threshold HST Current Threshold, then, it is assumed that the valve is actually deteriorated.

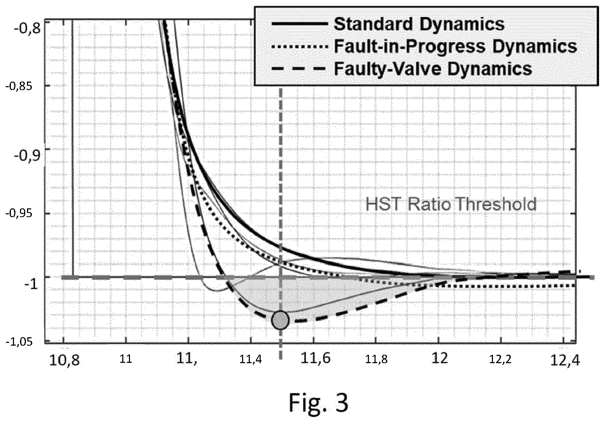

Exactly as above, the negative peak PF can be detected directly or by integration as shown in figure 3 regarding the trend of the hydrostatic ratio.

HST Current Threshold is chosen so as to be sufficiently lower than POK, so that as long as the hydrostat is in optimal operating conditions, the integral area is zero. As the undershoot increases, the same happens with the integral area. The limit value of the integral area can be determined empirically taking into due consideration that it also depends on the dynamics of the controller, in particular, the faster the controller the more the integral area is reduced, as the current signal it is faster to ascend.

Further considerations can be made by analysing, stabilizing the system after switching.

For example, in conditions of a new valve, the current necessary to bring the valve into a condition corresponding to a hydrostatic ratio -1 is approximately 500 mA. With a deteriorated valve, this current corresponds to 400 mA, which means that the controller has managed to achieve a stable condition of the hydrostatic transmission, but it is clear that the operating point has varied from 500 to 400 mA, causing a DIV divergence between the steady-state values of control signal of the valve, that is after the transient.

Obviously, the values shown here depend on the type and number of valve (s) implemented.

From an implementation point, the first embodiment of the present invention provides:
- Step 1: checking that the oil temperature is in a predetermined range, if the check is satisfied, proceed with the next steps, otherwise you cycle on checking the temperature;
- Step 2: monitoring the occurrence of a transition from a starting condition, parking or dynamic stop, to a second arrival condition, dynamic stop or parking, if the verification is satisfied, proceed with the next steps otherwise go back to the step 1;
- Step 3: counting of the time necessary to reach the arrival condition;
- Step 4: if the counted time does not exceed a predetermined interval, then go back to step 1, otherwise
- Step 5: identification of the deterioration of the hydrostat.

In relation to the type of control implemented, in an open or closed circuit or the presence or absence of PID controllers, the fault is determined when the counted time exceeds a positive or negative, beyond a predetermined threshold, a predetermined actuation time value.

Advantageously, this solution is insensitive to the type of controller implemented.

A second variant of the present invention provides:
- Step 11: checking that the oil temperature is in a predetermined range, if the check is satisfied, proceed with the next steps, otherwise you cycle on checking the temperature;
- Step 12: monitoring the occurrence of a transition from a starting condition, parking or dynamic stop, to a second arrival condition, dynamic stop or parking, if the verification is satisfied, proceed with the next steps otherwise go back to the step 11;
- Step 13: Measurement of the peak value reached by the trend of the hydrostatic ratio,
- Step 14: if the measured peak value does not exceed a predetermined range, then go back to step 11, otherwise
- Step 15: identification of the deterioration of the hydrostat.

Since it is possible to identify a deterioration both in the transition towards the first condition and towards the second condition, it is therefore appropriate to identify a range of allowed hydrostatic ratios. Nonetheless, it can be expected to detect the deterioration of the hydrostat in the switching to only the first or second operating condition. Advantageously, in the hypothesis of having a controller that "recovers" the slowness of the valve due to the relative deterioration, this solution is faster in identifying the same deterioration.

Evidently, with reference to figures 2 and 3, the hydrostatic ratio must identify a lower peak than a threshold, therefore to identify a fault a hydrostatic ratio must be detected that is lower than the lower threshold HST ratio Threshold. Similarly, if the transition was monitored in PARK conditions, the hydrostatic ratio would go beyond the ZERO RATIO condition.

It is worth pointing out that the gears and transmission ratios are generally sized so as to obtain the vehicle in dynamic standstill with a ratio of "approximately" -1, but the present invention also applies if a different hydrostatic ratio is chosen, for example -0.8 or +0.2, etc..

In particular, it is not advisable to have the dynamic stop exactly at a -1 ratio, as there is the risk that the pump is not able to efficiently compensate for losses under load, therefore, the -1 ratio is more conventional than real, using a suitable "margin of displacement".

According to a preferred implementation of the previous variants, the intervals or the individual thresholds are set downstream of a statistical sampling carried out on a sample of hydrostatic transmissions.

According to another preferred implementation of the previous variants, the intervals or individual thresholds are learned through a self-learning process that the controller performs in the first hours of use of the vehicle.

According to a preferred variant, both monitoring techniques are implemented, both on the times and on the undershoot. According to a third preferred variant of the invention, the following steps are envisaged:
- Step 21: check that the oil temperature is in a predetermined range, if the check is satisfied, proceed with the next steps, otherwise you cycle on checking the temperature;
- Step 22: monitoring the occurrence of a transition from a starting condition, parking or dynamic stop, to a second arrival condition, dynamic stop or parking, if the verification is satisfied proceed with the next steps otherwise go back to the step 21;
- Step 23: Measurement of the peak value of the driving current of the hydrostat valve,
- Step 24: if this measured peak value does not exceed a predetermined range, then go back to step 21, otherwise
- Step 25: identification of the deterioration of the hydrostat.

According to a fourth preferred variant of the invention, the following steps are envisaged:
- Step 31: check that the oil temperature is in a predetermined range, if the check is satisfied, proceed with the next steps, otherwise you cycle on checking the temperature;
- Step 32: monitoring the occurrence of a transition from a starting, parking or dynamic stop condition, to a second arrival, dynamic stop or parking condition, if the verification is satisfied proceed with the next steps otherwise go back to the step 31;
- Step 33: waiting for a predetermined time interval, in order to reach stationary conditions,
- Step 34: measurement of a value V of the valve driving current,
- Step 35: if the value of the driving current does not exceed a predetermined VOK interval, then go back to step 31, otherwise
- Step 36: identification of the deterioration of the hydrostat.

This solution is also independent of the nature of the controller implemented.

Preferably, the monitoring of the deterioration conditions of the hydrostat is carried out in the transition from the dynamic standstill condition to the PARK condition using the transient current monitoring technique, similar to the second variant described above. The method comprises the following steps:
A second variant of the present invention provides:
- Step 41: check that the oil temperature is in a predetermined range, if the check is satisfied, proceed with the next steps, otherwise you cycle on checking the temperature;
- Step 42: monitoring the occurrence of a transition from a starting condition, parking or dynamic stop, to a second arrival condition, dynamic stop or parking, if the verification is satisfied, proceed with the next steps otherwise go back to the step 41;
- Step 43: Measurement of the peak value of the driving current of the hydrostat,
- Step 44: if the measured peak value does not exceed a predetermined range, then go back to step 41, otherwise
- Step 45: identification of the deterioration of the hydrostat.

The other techniques work well when you plan to operate the hydrostat only after making sure that the clutch on the transmission is fully open.

Preferably, the controller is of the feedforward type with PID controller.

The present invention can be advantageously carried out by means of a computer program which comprises coding means for the realization of one or more steps of the method, when this program is executed on a computer. Therefore, it is understood that the scope of protection extends to said computer program and further to computer readable means which comprise a recorded message, said computer readable means comprising program coding means for carrying out one or more steps of the method , when this program is run on a computer.

In particular, a processing unit is designed to acquire a request for a parking command, for example by means of a button located on a vehicle dashboard.

Furthermore, the processing unit is designed to acquire a request for a transmission activation command to go into a "geared" condition, that is, when the third door of the planetary gear is stationary despite being the first and second doors. driven in rotation respectively by the prime mover and the hydraulic mover.

The present invention relates to a method of controlling the at least one valve of the HY hydrostat. The control method includes (Step A) the continuous injection of a first lowintensity disturbing signal (dither), so as to keep the valve in a state of oscillation around any predetermined valve working point and to vary a characteristic parameter of the disturbance signal when the valve is deteriorated according to any of the monitoring method variants described above. The control method preferably further comprises a step of signalling to a user an imminent need to replace the valve when the characteristic parameter has changed a first time and a further step of signalling to the user an immediate need to replace the valve when the characteristic parameter it changed one more time.

The characteristic parameter of the disturbing signal is the frequency and/or the waveform.

Generally, the dither signal has a square waveform with a preordained intensity, i.e. step width.

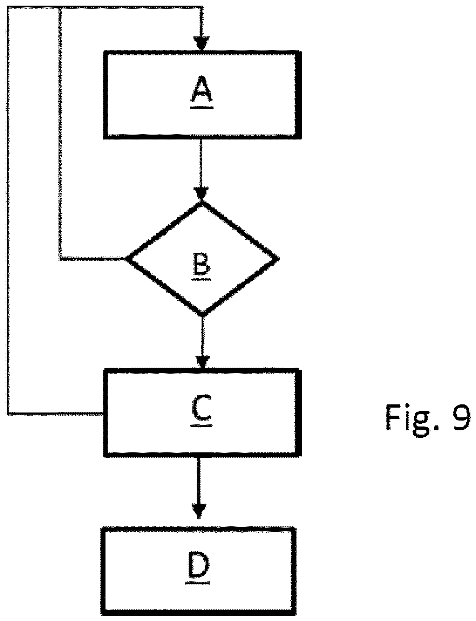

With reference to Figure 9, the control method comprises
- (Step A) the continuous injection of a first disturbing signal (dither),
- (Step B) monitoring of a state of wear of the hydrostat valve (HY), when it appears that the valve has deteriorated, then,
- (Step C) first variation of a characteristic parameter of the disturbing signal, signalling to the user of an imminent need to replace the valve and re-execution of the method from the beginning (Step A), when a state of wear of the valve is deteriorated then ,
- (Step D) second variation of the characteristic parameter of the disturbing signal, signalling to the user of an immediate replacement of the valve and inhibition of the transition to the second operating condition.

Implementing variations to the non-limiting example described are possible, without, however, departing from the scope of protection of the present invention as in the appended claims.

From the above description, the person skilled in the art is able to realize the object of the invention without introducing further construction details.

## Claims

1. Method for monitoring the wear state of a hydrostat (HY) of a hydrostatic transmission (HT), the hydrostat comprising a pump (P) with variable displacement and a hydraulic motor (HM) fluidly connected with the pomp (P), the hydrostatic transmission comprising at least a epicyclic gearing having a first port operatively driven by a first mover (engine), a second port operatively driven by the hydraulic motor and a third port operatively connected with a vehicular propulsion wheel, the hydrostat comprising a valve for regulating the pump displacement, configured to assume at least
- a first operating condition (ZERO RATIO) wherein the pump displacement is zero,
- a second operating condition (HSTO) wherein the pump displacement is such that to drive the hydraulic motor at a predetermined rotation speed such that said third port is at standstill,
the method comprising an evaluation procedure of a parameter representative of a valve dynamic during the transition between the first and the second operating condition and/or vice versa,
the method is **characterized in that** said parameter comprises a measurement of the switching time of the valve and when said measurement is external to a preordained time interval then said valve is judged as deteriorated.

2. Method according to claim 1, wherein the first operating condition is associated to the disengagement of a clutch (CL) arranged on the hydraulic transmission between the third port of the epicyclic gearing and the vehicular propulsion wheel and wherein the second operating condition is associated with the engagement of the clutch.

3. Method according to claim 2, wherein when the vehicle PARK condition is activated, the clutch is disengaged and the first operating condition of the pump is commanded and wherein when the geared condition is activated (Standstill DRIVE) the second operating condition is commanded and the clutch is engaged.

4. Method according to any one of claims 1 - 3, wherein said parameter comprises a measurement of an undershooting or overshooting of the speed of the hydraulic motor with respect to said predetermined speed in the transition from said first to said second operating condition and/or the vice versa.

5. Method according to any one of claims 1 - 3, wherein said parameter comprises a measure of a undershoot or overshoot of the trend of a hydrostatic ratio (HST) in the transition from said first to said second operating condition and/or vice versa.

6. Method according to any one of the preceding claims 1 - 3, further comprising an acquisition of an electrical signal for controlling the valve and wherein said parameter comprises a measurement of undershooting or overshooting of the trend of the electric signal with respect to a predetermined threshold.

7. Method according to any one of claims 1-3, further comprising an acquisition of an electric signal driving the valve and wherein said parameter comprises a measurement of a divergence (DIV) of the driving signal after a preordained time interval from the transition with respect to at a preordained threshold of the driving signals.

8. Method according to any of the preceding claims, further comprising a step of measuring a temperature of the hydraulic oil of the hydrostat and of performing the monitor only when the measured temperature falls within a preordained temperature range.

9. Method according to any of claims 1-8 for controlling at least one valve of a hydrostat (HY) of a hydrostatic transmission (HT), the hydrostat comprising a variable displacement pump (P) and a hydraulic motor (HM) operatively connected to the pump (P), the hydrostatic transmission comprising at least one epicyclic gearing having a first port operatively driven by a prime mover, a second port operatively driven by the hydraulic motor and a third port operatively connected with a vehicular propulsion wheel, the method comprising (Step A) the continuous injection of a first low intensity dither signal so as to keep the valve in a state of oscillation around any preordained valve working point and to vary a characteristic parameter of the dither signal when the valve is judged as deteriorated.

10. Method according to claim 9, further comprising a step of signalling to an user an imminent need to replace the valve when the characteristic parameter is changed a first time and a further step of signalling to the user an immediate need to replace the valve when the characteristic parameter is changed a further time.

11. Method according to any of claims 9 or 10, wherein said characteristic parameter of the dither signal is the frequency and/or the waveform.

12. Method according to any one of claims 9 - 11, comprising
- (Step A) continuous injection of a first dither signal,
- (Step B) monitoring of a wear state of the valve of the hydrostat (HY), when it is judged that the valve is deteriorated, then,
- (Step C) first variation of a characteristic parameter of the dither signal, signalling to the user of an imminent need to replace the valve and re-execution of the method from the beginning (Step A), when a state of wear of the valve is newly judged as deteriorated then,
- (Step D) second variation of the characteristic parameter of the dither signal, signalling to the user of an immediate need of replacement of the valve and inhibition of the transition to the second operating condition.

13. Computer program comprising program-coding means arranged to carry out the method as defined in any one of claims 1 to 12, when said program is run on a computer.

14. Computer readable means comprising a recorded program, said computer readable means comprising program coding means adapted to perform the method as defined in any one of claims 1 to 12, when said program is run on a computer.

15. System for monitoring a state of wear of a control valve of a hydrostat (HY) of a hydrostatic transmission (HT), the hydrostat comprising a variable displacement pump (P) and a hydraulic motor (HM) fluidly connected with the pump (P), the hydrostatic transmission comprising at least one epicyclic gearing having a first port operatively driven by a prime mover (engine), a second port operatively driven by the hydraulic motor and a third port operatively connected with a vehicular propulsion wheel, said valve being predisposed for regulation the displacement of the pump (P) to assume at least
- a first operating condition (ZERO RATIO) wherein the pump displacement is zero,
- a second operating condition (HSTO) wherein the displacement of the pump is such as to bring the hydraulic motor into rotation at a preordained speed such that said third port of the epicyclic gearing is stopped,
the system further comprises processing means configured to evaluate a parameter representative of the valve dynamics during a transition between said first and second operating conditions and/or vice versa, the system is **characterised in that** said parameter comprises a measurement of the switching time of the valve and when said measurement is external to a preordained time interval then said valve is judged as deteriorated.

16. System according to claim 15, wherein the processing means are configured to command together a transition to the first operating condition of the hydrostat and the opening of a clutch (CL) arranged on the transmission between the third port of the epicyclic gearing and the vehicular propulsion wheel and to command together a transition to the second operating condition and the clutch closing.

17. The system of claim 16 wherein the processing means is configured to control
- the opening of the clutch and the first operating condition of the pump when a request to activate the parking condition of the vehicle is acquired and
- the second operating condition and the closing of the clutch when a request to activate the gear running condition (Standstill DRIVE) is acquired.

18. System according to any one of the preceding claims to 17, wherein said processing means are configured to carry out the method as defined in any one of claims 4 to 12.

19. Agricultural or work vehicle comprising a prime mover (engine) connected to a vehicular propulsion wheel by means of a transmission (HT) comprising a hydrostat (HY) and a clutch arranged between the hydrostat and the wheel, and wherein said hydrostat comprises a system for monitoring a wear state of a hydrostat control valve according to any one of claims 15 to 18 or for controlling a hydrostat control valve (HY) according to any one of claims 9 to 12.

## Patentansprüche

1. Verfahren zur Überwachung des Verschleißzustandes eines Hydrostaten (HY) eines hydrostatischen Antriebs (HT), wobei der Hydrostat eine Pumpe (P) mit variabler Verstellung und einen Hydraulikmotor (HM), der strömungstechnisch mit der Pumpe (P) verbunden ist, aufweist, wobei der hydrostatische Antrieb mindestens ein Planetengetriebe aufweist mit einem ersten Eingang, der wirkend von einer ersten Bewegungsvorrichtung (Motor) angetrieben wird, mit einem zweiten Eingang, der wirkend von dem Hydraulikmotor angetrieben wird, und mit einem dritten Eingang, der wirkend mit einem Fahrzeug-Antriebsrad verbunden ist, wobei der Hydrostat ein Ventil zur Regulierung der Pumpenverstellung aufweist, das eingerichtet ist zum Einnehmen von mindestens:
- einem ersten Betriebszustand (ZERO RATIO), bei dem die Pumpenverstellung null ist,
- einem zweiten Betriebszustand (HSTO), bei dem die Pumpenverstellung derart ist, um den Hydraulikmotor in einer vorbestimmten Drehgeschwindigkeit anzutreiben, so dass der dritte Eingang im Stillstand ist,
wobei das Verfahren ein Bewertungsverfahren eines Parameters, der charakteristisch für eine Ventildynamik während des Übergangs zwischen dem ersten und dem zweiten Betriebszustand und/oder umgekehrt ist, aufweist,
wobei das Verfahren **dadurch gekennzeichnet ist, dass** der Parameter einen Messwert einer Schaltzeit des Ventils aufweist, und, wenn der Messwert außerhalb eines vorbestimmten Zeitintervalls ist, das Ventil als verschlissen bewertet wird.

2. Verfahren nach Anspruch 1, wobei der erste Betriebszustand zugehörig zu dem Ausrücken einer Kupplung (CL) ist, die in dem hydraulischen Antrieb zwischen dem dritten Eingang des Planetengetriebes und dem Fahrzeug-Antriebsrad angeordnet ist, und wobei der zweite Betriebszustand zugehörig zu dem Einrücken der Kupplung ist.

3. Verfahren nach Anspruch 2, wobei, wenn der Fahrzeug-PARK-Zustand aktiviert wird, die Kupplung ausgerückt wird und der erste Betriebszustand der Pumpe angeordnet wird, und wobei, wenn der angetriebene Zustand aktiviert wird (Stillstand DRIVE), der zweite Betriebszustand angeordnet wird und die Kupplung eingerückt wird.

4. Verfahren nach einem der vorhergehenden Ansprüche 1 - 3, wobei der Parameter einen Messwert eines Unterschreitens oder Überschreitens der Geschwindigkeit des Hydraulikmotors bezüglich der vorbestimmten Geschwindigkeit des Schaltens von dem ersten zu dem zweiten Betriebszustand und/ oder umgekehrt aufweist.

5. Verfahren nach einem der Ansprüche 1 - 3, wobei der Parameter einen Messwert eines Unterschreitens oder Überschreitens des Trends eines hydrostatischen Verhältnisses (HST) des Schaltens von dem ersten zu dem zweiten Betriebszustand und/oder umgekehrt aufweist.

6. Verfahren nach einem der vorhergehenden Ansprüche 1 - 3, das des Weiteren ein Erfassen eines elektrischen Signals zur Steuerung des Ventils aufweist und wobei der Parameter einen Messwert eines Unterschreitens oder Überschreitens des Trends des elektrischen Signals bezüglich eines vorbestimmten Grenzwertes aufweist.

7. Verfahren nach einem der vorhergehenden Ansprüche 1 bis 3, das des Weiteren ein Erfassen eines elektrischen Signals, das das Ventil antreibt, aufweist, und wobei der Parameter einen Messwert einer Abweichung (DIV) des Antriebssignals nach einem vorbestimmten Zeitintervall von dem Schalten bezüglich eines vorbestimmten Grenzwertes des Antriebssignals aufweist.

8. Verfahren nach einem der vorhergehenden Ansprüche, das des Weiteren einen Schritt zur Messung einer Temperatur des Hydrauliköls des Hydrostaten und einen Schritt zur Ausführung der Überwachung nur dann, wenn die gemessene Temperatur in einen vorbestimmten Temperaturbereich fällt, aufweist.

9. Verfahren nach einem der Ansprüche 1 - 8 zur Steuerung von mindestens einem Ventil eines Hydrostaten (HY) eines hydrostatischen Antriebs (HT), wobei der Hydrostat eine Pumpe (P) mit variabler Verstellung und einen Hydraulikmotor (HM) aufweist, der wirkend mit der Pumpe (P) verbunden ist, wobei der hydrostatische Antrieb mindestens ein Planetengetriebe aufweist mit einem ersten Eingang, der wirkend von einer ersten Bewegungsvorrichtung angetrieben wird, mit einem zweiten Eingang, der wirkend von dem Hydraulikmotor angetrieben wird, und mit einem dritten Eingang, der wirkend mit einem Fahrzeug-Antriebsrad verbunden ist, wobei das Verfahren (Schritt A) das kontinuierliche Zuführen eines Dither-Signals mit niedriger Intensität aufweist, um so das Ventil in einem Zustand einer Schwingung um einen beliebigen vorbestimmten Ventil-Arbeitspunkt zu halten und einen charakteristischen Parameter des Dither-Signals zu verändern, wenn das Ventil als verschlissen bewertet wird.

10. Verfahren nach Anspruch 9, des Weiteren mit einem Schritt des Signalgebens an einen Benutzer einer unmittelbaren Notwendigkeit, das Ventil zu ersetzen, wenn der charakteristische Parameter ein erstes Mal verändert wird, und mit einem weiteren Schritt eines Signalgebens an den Benutzer einer unmittelbaren Notwendigkeit, das Ventil zu ersetzen, wenn der charakteristische Parameter sich ein weiteres Mal verändert.

11. Verfahren nach einem der Ansprüche 9 oder 10, wobei der charakteristische Parameter des Dither-Signals die Frequenz und/oder die Wellenform ist.

12. Verfahren nach einem der Ansprüche 9 - 11, aufweisend:
- (Schritt A) kontinuierliches Zuführen eines ersten Dither-Signals,
- (Schritt B) Überwachen eines Verschleißzustands des Ventils des Hydrostaten (HY), wenn bewertet wird, dass das Ventil verschlissen ist, dann,
- (Schritt C) erste Veränderung eines charakteristischen Parameters des Dither-Signals, Signalgeben an den Benutzer einer unmittelbaren Notwendigkeit, das Ventil zu ersetzen, und Wiederausführen des Verfahrens von Anfang an (Schritt A), wenn der Verschleißzustand des Ventils erneut als verschlissen bewertet wird, dann,
- (Schritt D) zweite Veränderung des charakteristischen Parameters des Dither-Signals, Signalgeben an den Benutzer einer unmittelbaren Notwendigkeit, das Ventil zu ersetzen, und Sperren des Schaltens in den zweiten Betriebszustand.

13. Computerprogramm, das Programm-Codierungsmittel aufweist, die dazu eingerichtet sind, das Verfahren nach einem der Ansprüche 1 bis 12 auszuführen, wenn das Programm auf einem Computer ausgeführt wird.

14. Computerlesbares Mittel, das ein gespeichertes Programm aufweist, wobei das computerlesbare Mittel ein Programm-Codierungsmittel aufweist, das dazu eingerichtet ist, das Verfahren nach einem der Ansprüche 1 bis 12 auszuführen, wenn das Programm auf einem Computer ausgeführt wird.

15. System zur Überwachung eines Verschleißzustandes eines Steuerventils eines Hydrostaten (HY) eines hydrostatischen Antriebs (HT), wobei der Hydrostat eine Pumpe (P) mit variabler Verstellung und einen Hydraulikmotor (HM), der strömungstechnisch mit der Pumpe (P) verbunden ist, aufweist, wobei der hydrostatische Antrieb mindestens ein Planetengetriebe aufweist mit einem ersten Eingang, der wirkend von einer ersten Bewegungsvorrichtung (Motor) angetrieben wird, mit einem zweiten Eingang, der wirkend von dem Hydraulikmotor angetrieben wird, und mit einem dritten Eingang, der wirkend mit einem Fahrzeug-Antriebsrad verbunden ist, wobei das Ventil zur Regulierung der Verstellung der Pumpe (P) eingerichtet ist zum Einnehmen von mindestens:
- einem ersten Betriebszustand (ZERO RATIO), bei dem die Pumpenverstellung null ist,
- einem zweiten Betriebszustand (HSTO), bei dem die Pumpenverstellung derart ist, um den Hydraulikmotor in eine vorbestimmte Drehgeschwindigkeit zu bringen, so dass der dritte Eingang des Planetengetriebes angehalten ist,
wobei das System des Weiteren aufweist:
Verarbeitungsmittel, die dazu eingerichtet sind, einen Parameter auszuwerten, der charakteristisch für eine Ventildynamik während des Übergangs zwischen dem ersten und zweiten Betriebszustand und/oder umgekehrt ist, wobei das System **dadurch gekennzeichnet ist, dass** der Parameter einen Messwert der Schaltzeit des Ventils aufweist, und wenn der Messwert außerhalb eines vorbestimmten Zeitintervalls liegt, dann das Ventil als verschlissen bewertet wird.

16. System nach Anspruch 15, wobei die Verarbeitungsmittel dazu eingerichtet sind, zusammen einen Übergang in den ersten Betriebszustand des Hydrostaten und das Öffnen einer Kupplung (CL), die in dem Antrieb zwischen dem dritten Eingang des Planetengetriebes und dem Fahrzeug-Antriebsrad angeordnet ist, anzuordnen, und zusammen einen Übergang in den zweiten Betriebszustand und ein Schließen der Kupplung anzuordnen.

17. System nach Anspruch 16, wobei das Verarbeitungsmittel zum Steuern eingerichtet ist von:
- dem Öffnen der Kupplung und des ersten Betriebszustands der Pumpe, wenn eine Anforderung zur Aktivierung des Parkzustandes des Fahrzeuges erhalten wird, und
- dem zweiten Betriebszustand und dem Schließen der Kupplung, wenn eine Anforderung zur Aktivierung des Getriebe-Antriebszustands (Stillstand DRIVE) erhalten wird.

18. System nach einem der vorhergien Ansprüche 15 bis 17, wobei das Verarbeitungsmittel dazu eingerichtet ist, das Verfahren nach einem der Ansprüche 4 bis 12 auszuführen.

19. Landwirtschaftliches Fahrzeug oder Arbeitsfahrzeug, aufweisend eine erste Bewegungsvorrichtung (Motor), die mit einem Fahrzeug-Antriebsrad mittels eines Antriebs (HT) verbunden ist, der einen Hydrostaten (HY) und eine Kupplung, die zwischen dem Hydrostaten und dem Rad angeordnet ist, aufweist, und wobei der Hydrostat ein System zur Überwachung eines Verschleißzustandes eines Hydrostat-Steuerventils nach einem der Ansprüche 15 bis 18 oder zur Steuerung eines Hydrostat-Steuerventils (HY) nach einem der Ansprüche 9 bis 12 aufweist.

## Revendications

1. Procédé pour surveiller l'état d'usure d'un hydrostat (HY) d'une transmission hydrostatique (HT), l'hydrostat comprenant une pompe (P) à déplacement variable et un moteur hydraulique (HM) relié fluidiquement à la pompe (P), la transmission hydrostatique comprenant au moins un engrenage épicycloïdal ayant un premier port entraîné de manière fonctionnelle par un premier moteur, un deuxième port entraîné de manière fonctionnelle par le moteur hydraulique et un troisième port relié de manière fonctionnelle à une roue de propulsion de véhicule, l'hydrostat comprenant une vanne pour réguler le déplacement de la pompe, configuré pour assumer au moins
- un premier état de fonctionnement (RATIO ZERO) dans lequel le déplacement de la pompe est nul,
- un second état de fonctionnement (HSTO) dans lequel le déplacement de la pompe est tel qu'il entraîne le moteur hydraulique à une vitesse de rotation prédéterminée de sorte que ledit troisième port est à l'arrêt,
le procédé comprenant une procédure d'évaluation d'un paramètre représentant une dynamique de vanne pendant la transition entre le premier et le second état de fonctionnement et/ou vice versa,
le procédé est **caractérisé en ce que** ledit paramètre comprend une mesure du temps de commutation de la vanne et lorsque ladite mesure est extérieure à un intervalle de temps prédéterminé, alors ladite vanne est jugée comme étant détériorée.

2. Procédé selon la revendication 1, dans lequel le premier état de fonctionnement est associé au désengagement d'un embrayage (CL) disposé sur la transmission hydraulique entre le troisième port de l'engrenage épicycloïdal et la roue de propulsion de véhicule et dans lequel le second état de fonctionnement est associé à l'engagement de l'embrayage.

3. Procédé selon la revendication 2, dans lequel, lorsque l'état PARK du véhicule est activé, l'embrayage est désengagé et le premier état de fonctionnement de la pompe est commandé et dans lequel, lorsque l'état d'engrenage est activé (DRIVE à l'arrêt), le second état de fonctionnement est commandé et l'embrayage est engagé.

4. Procédé selon l'une quelconque des revendications 1 à 3, dans lequel ledit paramètre comprend une mesure d'un sous-dépassement ou d'un dépassement de la vitesse du moteur hydraulique par rapport à ladite vitesse prédéterminée lors de la transition entre ledit premier et ledit second état de fonctionnement et/ou vice-versa.

5. Procédé selon l'une quelconque des revendications 1 à 3, dans lequel ledit paramètre comprend une mesure d'un sous-dépassement ou d'un dépassement de la tendance d'un rapport hydrostatique (HST) lors de la transition dudit premier audit second état de fonctionnement et/ou vice versa.

6. Procédé selon l'une quelconque des revendications précédentes 1 à 3, comprenant en outre une acquisition d'un signal électrique pour commander la vanne et dans lequel ledit paramètre comprend une mesure d'un sous-dépassement ou d'un dépassement de la tendance du signal électrique par rapport à un seuil prédéterminé.

7. Procédé selon l'une quelconque des revendications 1 à 3, comprenant en outre une acquisition d'un signal électrique commandant la vanne et dans lequel ledit paramètre comprend une mesure d'une divergence (DIV) du signal de conduite après un intervalle de temps prédéterminé à partir de la transition par rapport à un seuil prédéterminé des signaux de conduite.

8. Procédé selon l'une quelconque des revendications précédentes, comprenant en outre une étape de mesure d'une température de l'huile hydraulique de l'hydrostat et d'exécution de la surveillance uniquement lorsque la température mesurée tombe dans une plage de température prédéterminée.

9. Procédé selon l'une quelconque des revendications 1 à 8 pour commander au moins une vanne d'un hydrostat (HY) d'une transmission hydrostatique (HT), l'hydrostat comprenant une pompe à déplacement variable (P) et un moteur hydraulique (HM) relié de manière fonctionnelle à la pompe (P), la transmission hydrostatique comprenant au moins un engrenage épicycloïdal ayant un premier port entraîné de manière fonctionnelle par un premier moteur, un deuxième port entraîné de manière fonctionnelle par le moteur hydraulique et un troisième port relié de manière fonctionnelle à une roue de propulsion de véhicule, le procédé comprenant (étape A) l'injection continue d'un premier signal de vibration de faible intensité de manière à maintenir la vanne dans un état de vibration autour de tout point de fonctionnement de vanne prédéterminé et à faire varier un paramètre caractéristique du signal de vibration lorsque la vanne est jugée comme étant détériorée.

10. Procédé selon la revendication 9, comprenant en outre une étape consistant à signaler à un utilisateur un besoin imminent de remplacer la vanne lorsque le paramètre caractéristique est modifié une première fois et une autre étape consistant à signaler à l'utilisateur un besoin immédiat de remplacer la vanne lorsque le paramètre caractéristique est modifié une autre fois.

11. Procédé selon l'une quelconque des revendications 9 ou 10, dans lequel ledit paramètre caractéristique du signal de vibration est la fréquence et/ou la forme d'onde.

12. Procédé selon l'une quelconque des revendications 9 à 11 comprenant :
- (Étape A) l'injection continue d'un premier signal de vibration,
- (Étape B) la surveillance d'un état d'usure de la vanne de l'hydrostat (HY), lorsqu'il est jugé que la vanne est détériorée, puis,
- (Étape C) une première variation d'un paramètre caractéristique du signal de vibration, signalant à l'utilisateur un besoin imminent de remplacer la vanne et une nouvelle exécution du procédé depuis le début (Étape A), lorsqu'un état d'usure de la vanne est à nouveau jugé détériorée,
- (Étape D) une seconde variation du paramètre caractéristique du signal de vibration, signalant à l'utilisateur un besoin immédiat de remplacement de la vanne et l'inhibition de la transition vers le second état de fonctionnement.

13. Programme informatique comprenant des moyens de codage de programme conçus pour mettre en oeuvre le procédé tel que défini dans l'une quelconque des revendications 1 à 12, lorsque ledit programme est exécuté sur un ordinateur.

14. Moyen lisible par ordinateur comprenant un programme enregistré, ledit moyen lisible par ordinateur comprenant des moyens de codage de programme adaptés pour exécuter le procédé tel que défini dans l'une quelconque des revendications 1 à 12, lorsque ledit programme est exécuté sur un ordinateur.

15. Procédé pour surveiller un état d'usure d'une vanne de commande d'un hydrostat (HY) d'une transmission hydrostatique (HT), l'hydrostat comprenant une pompe (P) à déplacement variable et un moteur hydraulique (HM) relié fluidiquement à la pompe (P), la transmission hydrostatique comprenant au moins un engrenage épicycloïdal ayant un premier port entraîné de manière fonctionnelle par un premier moteur, un deuxième port entraîné de manière fonctionnelle par le moteur hydraulique et un troisième port relié de manière fonctionnelle à une roue de propulsion de véhicule, ladite vanne étant prédisposée pour réguler le déplacement de la pompe (P) pour assumer au moins
- un premier état de fonctionnement (RATIO ZERO) dans lequel le déplacement de la pompe est nul,
- un second état de fonctionnement (HSTO) dans lequel le déplacement de la pompe est tel qu'il amène le moteur hydraulique à tourner à une vitesse prédéterminée telle que ledit troisième port de l'engrenage épicycloïdal est arrêté,
le système comprend en outre des moyens de traitement configurés pour évaluer un paramètre représentatif de la dynamique de la vanne pendant une transition entre lesdits premier et second états de fonctionnement et/ou vice versa, le système étant **caractérisé en ce que** ledit paramètre comprend une mesure du temps de commutation de la vanne et, lorsque ladite mesure est extérieure à un intervalle de temps prédéterminé, ladite vanne est jugée comme étant détériorée.

16. Système selon la revendication 15, dans lequel les moyens de traitement sont configurés pour commander ensemble une transition vers le premier état de fonctionnement de l'hydrostat et l'ouverture d'un embrayage (CL) disposé sur la transmission entre le troisième port de l'engrenage épicycloïdal et la roue de propulsion de véhicule et pour commander ensemble une transition vers le second état de fonctionnement et la fermeture de l'embrayage.

17. Système selon la revendication 16 dans lequel les moyens de traitement sont configurés pour commander
- l'ouverture de l'embrayage et le premier état de fonctionnement de la pompe lorsqu'une demande d'activation de l'état de stationnement du véhicule est acquis et
- le second état de fonctionnement et la fermeture de l'embrayage lorsqu'une demande d'activation de l'état de marche d'engrenage (DRIVE à l'arrêt) est acquise.

18. Système selon l'une quelconque des revendications précédentes 15 à 17, dans lequel lesdits moyens de traitement sont configurés pour mettre en oeuvre le procédé tel que défini dans l'une quelconque des revendications 4 à 12.

19. Véhicule agricole ou de travail comprenant une machine motrice (moteur) reliée à une roue de propulsion de véhicule au moyen d'une transmission (HT) comprenant un hydrostat (HY) et un embrayage disposé entre l'hydrostat et la roue, et dans lequel ledit hydrostat comprend un système pour surveiller un état d'usure d'une vanne de commande d'hydrostat selon l'une quelconque des revendications 15 à 18 ou pour commander une vanne de commande d'hydrostat (HY) selon l'une quelconque des revendications 9 à 12.
